**Europäisches Patentamt**

**European Patent Office**

**Office européen des brevets**

(19)

(11) Veröffentlichungsnummer : **0 182 390 B1**

(12) **EUROPÄISCHE PATENTSCHRIFT**

(45) Veröffentlichungstag der Patentschrift :
28.09.88

(21) Anmeldenummer : 85116305.5

(22) Anmeldetag : 22.06.83

(60) Veröffentlichungsnummer der früheren Anmeldung nach Art. 76 EPÜ : 0116676

(51) Int. Cl.⁴ : **B 60 C 27/10**, B 60 C 27/06

(54) Verschluss für Seitenbügel von Gleitschutzketten.

(30) Priorität : 14.02.83 DE 3305073
20.05.83 DE 3318551

(43) Veröffentlichungstag der Anmeldung :
28.05.86 Patentblatt 86/22

(45) Bekanntmachung des Hinweises auf die Patenterteilung : 28.09.88 Patentblatt 88/39

(84) Benannte Vertragsstaaten :
AT BE CH FR GB LI NL SE

(56) Entgegenhaltungen :
DE-A- 2 020 452
DE-C- 355 910
US-A- 1 620 894
US-A- 2 657 728
US-A- 2 783 812

(73) Patentinhaber : ACCIAIERIE WEISSENFELS S.P.A.
Tarvisio
I-33010 Fusine Valromana (IT)

(72) Erfinder : Melzi, Carlo, Dr. Ing.
Tarvisio
I-33010 Fusine Valromana (IT)
Erfinder : Gregorutti, Paolo, Dr. Ing.
Tarvisio
I-33010 Fusine Valromana (IT)

(74) Vertreter : Geyer, Werner, Dr.-Ing.
Hermann-Vogel-Strasse 12
D-8000 München 40 (DE)

## Beschreibung

Die Erfindung bezieht sich auf einen Verschluß für in eine geschlossene Kreisform federnd vorgespannte, zur Montage aufspreizbare Seitenbügel von Gleitschutzketten für Fahrzeugreifen, der aus zwei jeweils an einem Ende des Seitenbügels befestigten Endstücken besteht, die in Verschlußstellung formschlüssig aneinander verhakend ausgebildet sind, wobei eine an einem Endstück vorgesehene Rastkante als Anschlag für eine am anderen Endstück angebrachte hakenförmige Umbiegung dient.

Gleitschutzketten für Fahrzeugreifen, bei denen zumindest ein innerer Seitenbügel für die Befestigung von über die Reifenlauffläche sich erstreckenden Kettenstrangabschnitten zur Erleichterung der Montage eingesetzt wird, sind schon lange bekannt und werden gerade in jüngerer Zeit in weitem Umfang eingesetzt. Für solche Seitenbügel werden vielfach kreisförmig ausgebildete Federstahlbügel oder aus einzelnen gelenkig miteinander verbundenen Teilen bestehende Stahl-Ringbügel eingesetzt, bei denen zur Montageerleichterung jedoch eine jeweils manuell erzielbare Durchmessererweiterung des betreffenden Seitenbügels möglich ist. Dabei wird der entsprechende Seitenbügel beidseits mit den Händen ergriffen, auseinandergebogen, sodann über den Reifen gestülpt und hinter dem Reifen wieder losgelassen, worauf er in eine eigensteife, geschlossene Ausgangsposition zurückfedert.

Es ist eine Vielzahl von Verschlüssen für solche Seitenbügel von Gleitschutzketten bekannt, wobei der Aufbau der Verschlüsse teilweise auch von der eingesetzten Konstruktion der Gesamtkette bzw. des inneren Seitenbügels abhängt. So sind z. B. Spannverschlüsse bekannt, die von der Reifenaußenseite her bedienbar sind (Spannkettenverschlüsse). Bei solchen Verschlüssen wird zwar vermieden, daß die Bedienungsperson nach dem Auflegen der Kette zum Schließend es Verschlusses um den Fahrzeugreifen herumgreifen muß. Andererseits weisen diese Verschlüsse jedoch den Nachteil auf, daß nach dem ersten Aufbringen und Anziehen das Fahrzeug (wenn auch nur wenig) vorwärts bewegt werden muß, wonach dann ein Nachspannen des Verschlusses erforderlich wird.

Andere bekannte Verschlüsse, bei denen nicht auf eine Bedienbarkeit von der Reifenaußenseite her abgestellt wird, bestehen im wesentlichen darin, daß zwei einzelne Endstücke vorgesehen sind, die in Verschlußstellung formschlüssig aneinander verhakend ausgebildet sind. Dabei dient eine an einem Endstück vorgesehene Rastkante als Anschlag für einen am anderen Endstück angebrachten Verschlußkörper. In einfachster Ausgestaltung sieht dies so aus, daß das eine Endstück als Haken ausgebildet ist, wobei die Ebene, innerhalb derer die Hakenform ausgebildet ist, im wesentlichen parallel zur Aufspannebene des Seitenbügels gerichtet ist, während das andere Endstück als entsprechend geformte Öse vorliegt, die manuell in den Haken eingehängt werden kann. Da hier jedoch die Gefahr besteht, daß ein solchermaßen eingehängter Haken/Ösen-Verschluß sich in Verschlußstellung unter ungünstigen Verhältnissen öffnen kann, ist bei einer weiteren Lösung vorgesehen, daß der radial ausgerichtete Haken mit einem über die Hakenöffnung überstülpbaren Verschlußelement versehen ist, so daß nach Einhängen des Hakens die Hakenöffnung durch Überstülpen dieses Elementes verschlossen und dadurch ein unerwünschtes Herausrutschen der Öse aus dem Haken sicher vermieden wird. Die letztgenannte Verschlußart ist jedoch relativ kompliziert geformt und auch sehr schwierig zu bedienen, da hier hinter dem Reifen von der Bedienungsperson nicht nur eingehakt, sondern anschließend auch noch manuell das Sicherungselement über die Hakenöffnung übergeklappt werden muß.

Bei solchen nicht von vorne bedienbaren Verschlüssen setzt nun die vorliegende Erfindung ein : es soll ein Verschluß der eingangs genannten Art geschaffen werden, der bei einfachem Aufbau, kostengünstiger Herstellbarkeit und auch relativ einfacher Formgebung eine auch unter ungünstigen Bedingungen sichere und rasche Verschlußwirkung bei gleichzeitig besonders einfacher Handhabbarkeit erzielt. Erfindungsgemäß wird dies bei einem Verschluß der eingangs genannten Art dadurch erreicht, daß beide Endstücke sowohl mit einer Rastkante wie auch mit einer hakenförmigen Umbiegung versehen sind, wobei jeweils die Rastkanten und die hakenförmigen Umbiegungen auf beiden Endstücken zueinander spiegelsymmetrisch angeordnet sind, daß ferner die hakenförmigen Umbiegungen an den einander zugewandten Enden der Endstücke vorgesehen und auf deren der Reifenseitenfläche abgewandten Seite als entgegen der Verschließrichtung umgebogene Haken ausgebildet sind, und daß sich in Verschlußstellung die einander zugewandten Endbereiche beider Endstücke seitlich nebeneinanderliegend überdecken. Vorzugsweise sind dabei beide Endstücke so ausgebildet, daß sie im montierten Zustand eine zueinander im wesentlichen spiegelsymmetrische Formgebung aufweisen.

Die Erfindung schafft einen einfach aufgebauten Verschluß, bei dem jedes Endstück so ausgebildet, ist, daß es gleichermaßen die Funktion eines « Hakens » wie auch die einer « Öse » ausüben kann : dies erleichtert die Montage ganz erheblich, da nach dem Überstreifen des Seitenbügels über das Fahrzeugrad nurmehr ein Zusammendrücken der beiden seitlichen Abschnitte des Bügels in Richtung einer Schließbewegung erforderlich ist. Wird der innere Seitenbügel beim Montieren nach seinem Überführen über die Reifenlauffläche freigelassen und federt er in seine geschlossene Ausgangslage zurück, dann werden bei dieser Gelegenheit die beiden an den Endstücken angebrachten hakenförmigen Umbiegungen ebenfalls gegeneinander angedrückt, wodurch, wegen der aneinander zur Anlage kommenden Rundungen der Haken, die beiden Endstücke etwas seitlich zueinander abgelenkt und dann in einem gewissen Überlappungsbereich so weit zueinander verschoben werden, bis der Haken, der auf der Rückseite des einen Endstückes entlanggrutscht, dort seine Einrastposition erreicht hat. Die erfindungsgemäße Ausgestaltung der Endstücke sichert eine besonders rasche, sozusagen « automatisch » wirkende gute Verriegelung bei Schließen der Halterung, wobei die Endteile überraschend einfach und unkompliziert gestaltet und aufgebaut sind.

Eine vorteilhafte Ausgestaltung des erfindungsgemäßen Verschlusses besteht darin, daß jedes Endstück jeweils einen flachen Abschnitt aufweist, der an seinem dem anderen Endstück zugewandten Ende hakenförmig umgebogen und in seinem Bereich außerhalb der hakenförmigen Umbiegung mit einer Öffnung versehen ist, durch die in Verschlußstellung die hakenförmige Umbiegung des anderen Endstücks hindurchgreift. Hierdurch läßt sich eine besonders einfache und besonders wirkungsvolle Formgebung erzielen. Eine weitere Verbesserung läßt sich bei einem solchen Verschluß dadurch erreichen, daß im Bereich zwischen der hakenförmigen Umbiegung und der Öffnung ein Permanentmagnet im jeweils flachen Abschnitt jedes Endstücks angebracht ist. Hierdurch wird sichergestellt, daß → wie auch immer die beiden Endstücke nebeneinander zur Anlage kommen — bei eingehakten Endstücken die beiden flachen Abschnitte durch den Permanentmagneten des Abschnitts, dessen Haken sich durch die Öffnung des anderen Abschnitts hindurch erstreckt, in guter gegenseitiger Anlage gehalten werden. Dabei kann die Stärke des Permanentmagneten unschwer so gewählt werden, daß der Verschluß der beiden Haken gut gehalten wird, ohne daß dennoch ein zu starker Widerstand durch den Magneten bei einer Demontage auftritt. Bei einer solchen Gestaltung des erfindungsgemäßen Verschlusses ist es weiterhin von Vorteil, wenn der flache Abschnitt im Bereich seiner hakenförmigen Umbiegung eine sich zum Biegungsende hin laufend verringernde Breite aufweist, weil dadurch die Einführung des Hakens in die Öffnung am anderen Endstück besonders erleichtert wird.

Eine andere vorzugsweise Ausgestaltung des erfindungsgemäßen Verschlusses besteht auch darin, daß jedes Endstück jeweils einen flachen Endabschnitt aufweist, der — in Längsrichtung des Endstückes gesehen — an seinem freien Ende mit einer seitlich versetzten, hakenförmigen, von der Reifenflanke weggerichteten Umbiegung versehen ist, wobei an dem flachen Endabschnitt in einem Abstand von der hakenförmigem Umbiegung und in gleicher seitlicher Lage wie diese eine Rastkante derart vorgesehen ist, daß beim Schließen des Verschlusses die hakenförmige Umbiegung des Endbereiches des jeweils anderen Endstückes an dieser Rastkante einhakbar ist. Auch hier werden, wie bei dem zuvor geschilderten Ausführungsbeispiel, zwei Endstücke eingesetzt, bei denen gesichert ist, daß beim Zusammenfedern der hinteren Halterung ein automatischer und gut wirksamer Verschluß der Enden des Seitenbügels erzielt wird. Durch die spiegelbildlich zueinander erfolgte Ausbildung der beiden Endabschnitte wird (wie auch bei der vorstehend geschilderten ersten Ausführungsform) erreicht, daß der gewünschte Verschluß und die angestrebte Verriegelung auch sicher zustandekommt, ungeachtet davon, welches der beiden Endstücke (sieht man von der Fahrzeuginnenseite her auf den Reifen) vorne und welches hinten zu liegen kommt. Die bei den eingesetzten hakenförmigen Umbiegungen vorhandene Krümmung gegen die Verschlußbewegung stellt sicher, daß nach dem Einschnappen des Hakens ein unerwünschtes Aufgehen der beiden Seitenteile bei der Fahrt absolut sicher vermieden ist.

Auch bei dieser Ausführungsform ist es wiederum von großem Vorteil, wenn an jedem Endbereich am flachen Endabschnitt im Bereich zwischen der hakenförmigen Umbiegung und der Rastkante ein Permanentmagnet angebracht ist, wobei bei dieser Ausgestaltung (wegen der gegenüber der erstgenannten Ausgestaltung fehlenden Öffnung) der Einsatz eines Magneten mit größerer Fläche erfolgen kann. Vorteilhafterweise wird dabei die Rastkante an ihrem einen Ende durch den flachen Endabschnitt und an ihrem anderen Ende durch eine Führungsnase begrenzt, wodurch eine seitliche Führung der hakenförmigen Umbiegung des anderen Endstückes beim Einhaken derselben ausgebildet wird (wobei hier « seitlich » im Sinne von seitlich zur Bewegungsrichtung verstanden sein soll). Auch diese Ausgestaltung für die Endstücke führt zu einem einfach herstellbaren, im Aufbau unkomplizierten, preisgünstigen und gleichzeitig doch wirkungsvollen sowie sicheren Verschluß, der eine einfache Bedienung bei großer Sicherheit und guter Funktion gewährleistet.

In weiterer vorzugsweise Ausgestaltung des erfindungsgemäßen Verschlusses sind die hakenförmigen Umbiegungen an beiden Endstücken so angeordnet, daß sie bei einer Verschluß-Schließbewegung mit ihren einander zugewendeten Biegerundungen gegeneinander anlaufen. Hier läßt sich eine sanfte seitliche Ablenkung bei der Verschlußbewegung erzielen, die wünschenswert ist, um die beiden Endstücke sich so weit überlappen zu lassen, daß der Haken des einen Endstückes in die entsprechende Raststellung am anderen Endstück problemlos eingreifen kann.

Es ist weiterhin vorteilhaft, wenn die flachen Abschnitte an den zugehörigen Seitenbügeln durch Nieten befestigt sind. Eine weitere, einfache und sehr wirkungsvolle Befestigungsmöglichkeit besteht aber auch darin, daß der flache Abschnitt jedes Endstücks mittels zweier seitlicher Befestigungslaschen am zugehörigen Seitenbügel befestigt ist, indem jede Seitenlasche so auf die Rückseite des anliegenden Endes des Seitenbügels umgebogen ist, daß sie durch eine am Ende des Seitenbügels entsprechend angebrachte Vertiefung im seitlichen Rand desselben hindurchgreift und auf der der Seitenflanke des Reifens zugewandeten Rückseite des Seitenbügels unter Druck anliegt. Hierdurch wird eine sichere, schnell aufbringbare und einfache Befestigung des flachen Abschnitts am zugehörigen Ende des Seitenbügels erzielt.

Die Erfindung wird nachfolgend anhand der Zeichnung im Prinzip beispielshalber noch näher erläutert. Es zeigen :

Fig. 1 eine Ausführungsform für einen erfindungsgemäßen Verschluß, der am Innenbügel einer Gleitschutzvorrichtung (Schneekette) befe-stigt ist (von der Reifeninnenseite her gesehen), in geschlossenem Zustand ;

Fig. 2 eine Detaildarstellung der in Fig. 1 gezeigten Verschlußglieder beim Schließvorgang (im gerade noch nicht geschlossenen Zustand des Innenbügels) ;

Fig. 3 und Fig. 4 Darstellungen zweier Ausfüh-rungsformen für Endstücke eines erfindungsge-mäßen Verschlusses (in dessen eingehaktem Ver-schlußzustand) ;

Fig. 5 eine Detaildarstellung des in Fig. 4 gezeigten erfindungsgemäßen Verschlusses (die Endstücke befinden sich noch nicht im geschlossenen Zustand) während einer Schließbewegung, in einer Stellung ähnlich wie in Fig. 2 gezeigt, sowie

Fig. 6 die Darstellung eines Ausführungsbeispiels zur Montage der in den Fig. 1 bis 3 gezeigten Endstücke am Ende des entsprechen-den Seitenbügels (obere Darstellung : unbefestig-ter Zustand ; untere Darstellung : befestigter Zustand — mit Teilschnitt-Darstellung).

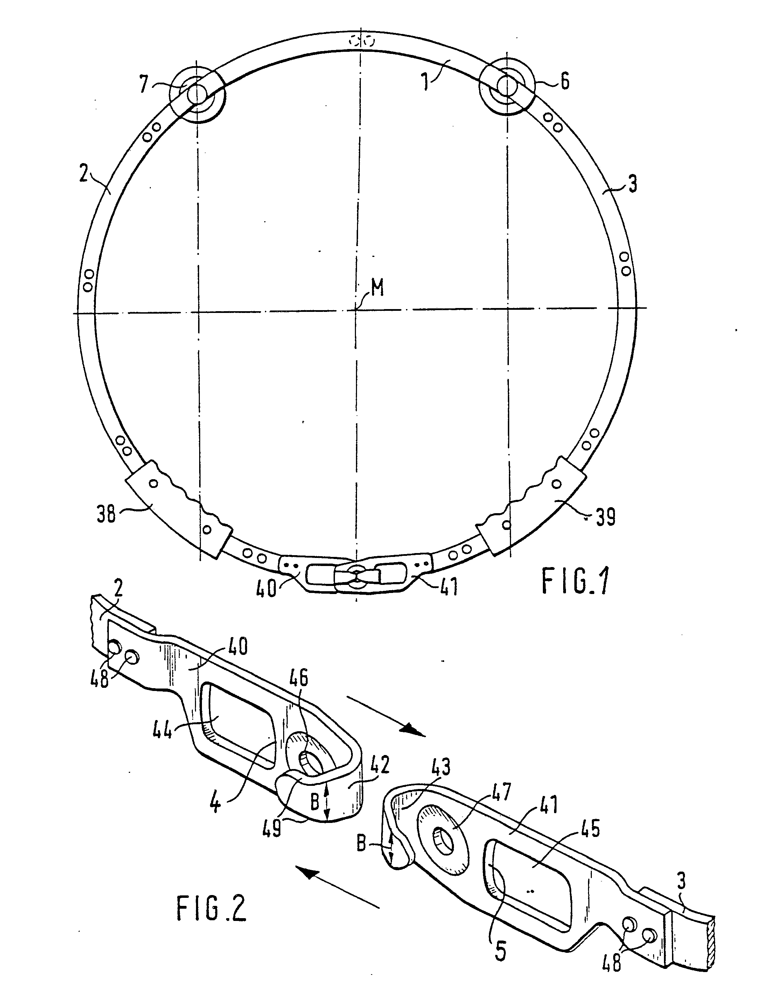

In Fig. 1 ist eine hintere Halterung in Form eines Seitenbügels für eine Gleitschutzvorrichtung dargestellt und zwar in einer Draufsicht auf die Reifeninnenseite, wobei zur Vereinfachung der Darstellung jedoch die Reifenkonturen ebenso wie die Spurketten weggelassen sind und nur die reine Halterung gezeigt ist. Die dargestellte Halterung besteht aus einem starren Mittelteil 1 aus gebogenem Flachstahl mit zwei an diesem gelenkig über in Schließrichtung federvorgespannte Drehgelenke 6 und 7 befestigten starren Seitenteilen 2 und 3 aus gebogenem Flachstahl. Mit geringem Abstand von den Enden der Seitenteile 2 und 3 sind auf diesen Handgriffe 38 und 39 angebracht, die vorzugsweise aus einem geeigneten Kunststoff bestehen und nicht nur die Handhabung der Gleitschutzvorrichtung bei deren Montage durch die Bedienungsperson erheblich vereinfachen, sondern überdies in ihrer Lage und ihrer Masse so gewählt sind, daß die Halterung in derselben geschlossenen Form, in der sie in Fig. 1 dargestellt ist, bezüglich ihres Drehmittelpunktes M hinsichtlich freier Massenkräfte bei einer Drehung ausgeglichen ist.

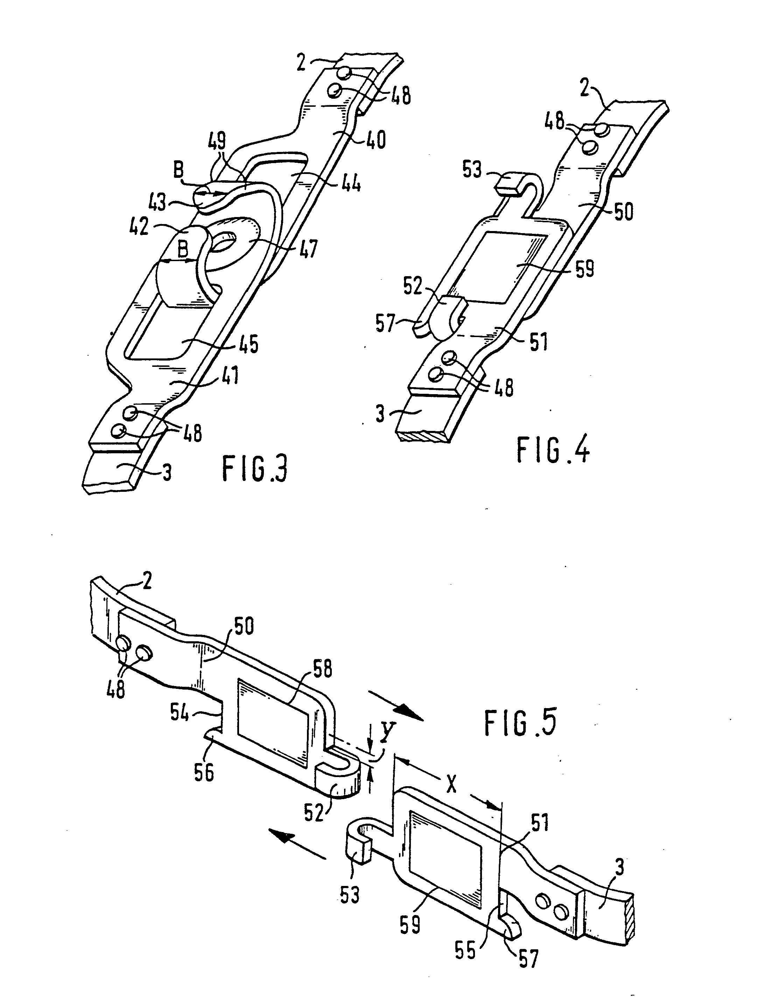

Bei dem in Fig. 1 gezeigten Seitenbügel (Halterung) werden an den Enden der starren Seitenteile 2 und 3 Endstücke in Form von flachen Endabschnitten 40 bzw. 41 eingesetzt, deren genaue Funktion und Ausbildung in den Fig. 2 und 3 noch näher dargestellt wird.

In Fig. 2 ist prinzipiell und in vergrößertem Maßstab gezeigt, wie beim Schließen des in Fig. 1 gezeigten Seitenbügels die beiden flachen Endabschnitte 40 und 41 bei der Schließbewegung kurz vor Erreichen der Verschlußstellung aufeinander zulaufen (was durch zwei gegenläufige seitliche Pfeile dargestellt ist), während in Fig. 1 das Erreichen der auch in Fig. 1 ersichtlichen Verschlußstellung wiedergegeben ist.

Die beiden Endabschnitte 40 und 41 sind dabei, wie aus Fig. 2 bzw. 3 ersichtlich ist, aus einem Flachmaterial gefertigt, das an seinem einen Ende, das dem zugehörigen Seitenteil 2 bzw. 3 des Seitenbügels zugewendet ist, durch eine geringe Abbiegung seitlich zu seinem mittleren Abschnitt so versetzt umgelenkt wird, daß der betreffende Mittelabschnitt, in dem sich auch Öffnungen 44 und 45 befinden, etwa in einer Verlängerung des Endabschnittes des zugehörigen Seitenteiles 2 bzw. 3 verläuft, wie dies in Fig. 2 bzw. Fig. 3 im einzelnen dargestellt ist, wobei auf die dort gezeigte Formgebung hier ausdrücklich verwiesen sein soll.

Die flachen Endabschnitte 40 und 41 sind über Nieten 48 am zugehörigen Ende des entsprechenden Seitenteiles 2 bzw. 3 befestigt.

Das jeweils andere, freie Ende des flachen Endabschnitts 40 bzw. 41 ist in der aus Fig. 2 bzw. Fig. 3 ebenfalls näher ersichtlichen Weise hakenförmig umgebogen, wobei die dabei ausgebildeten hakenförmigen Umbiegungen 42 und 43 jeweils auf die Seite ausgebogen sind, die von der Seitenflanke des Reifens, an welcher der entspre-chende Seitenbügel angeordnet wird, abgewen-det ist. Wie ebenfalls aus den Fig. 2 und 3 entnehmbar ist, laufen dabei die Seitenkanten 49 im Bereich der hakenförmigen Umbiegungen 42 und 43 vom Beginn der Umbiegung bis zu deren Ende hin so zusammen, daß dabei die Breite B (vgl. Fig. 2 und Fig. 3) im Bereich der hakenförmigen Umbiegungen 42 bzw. 43 vom Beginn der Umbiegung bis zu deren Ende hin laufend abnimmt. Auch hier wird auf die entsprechende zeichnerische Darstellung in Fig. 2 und Fig. 3 insoweit ausdrücklich verwiesen.

In ihrem jeweils mittleren Bereich, d. h. im Bereich zwischen der Befestigung am zugehörigen Seitenteil 2 bzw. 3 einerseits und der hakenförmigen Umbiegung 42 bzw. 43 andererseits, sind die flachen Endabschnitte 40 und 41 mit einer Öffnung 44 bzw. 45 versehen, die jedoch außerhalb des Bereiches liegt, der jeweils von der entsprechenden hakenförmigen Umbiegung 42 bzw. 43 überdeckt wird. Im Bereich zwischen der jeweiligen Öffnung 44 bzw. 45 und der hakenförmigen Umbiegung 42 bzw. 43 ist auf dem entsprechenden flachen Endabschnitt 40 bzw. 41 ein Permanentmagnet 46 bzw. 47 angeordnet und zwar jeweils auf der Seite des flachen Endabschnittes 40 bzw. 41, auf die hin auch der entsprechende Endhaken 42 bzw. 43 umgebogen ist. Die Befestigung der Permanentmagneten 46 bzw. 47 kann in verschiedenerlei Art erfolgen, als besonders vorteilhaft hat sich jedoch die Befestigung erwiesen, bei welcher die jeweiligen Permanentmagneten 46 bzw. 47 mittels eines geeigneten Klebers in eine entsprechende Aufnahmeöffnung innerhalb des jeweiligen Endabschnittes 40 bzw. 41 eingeklebt werden. Neben den in Fig. 2 gezeigten, besonders geeigneten runden Ausbildungen solcher Permanentmagnete könnte natürlich auch jede andere geeignete Ausbildungsform Verwendung finden.

Beim Schließvorgang werden nun die beiden an den Enden der Seitenteile 2 und 3 befestigten Endabschnitte 40 und 41 in der aus Fig. 2 ersichtlichen Weise aufeinander zubewegt, wobei die gerundeten Endflächen der hakenförmigen Umbiegungen 42 und 43 gegeneinander anlaufen. Unter dem Druck der Schließkräfte aus den federvorgespannten Drehgelenken 6 und 7 erfolgt bei diesem Anlaufen der hakenförmigen Umbiegungen 42 und 43 gegeneinander eine seitliche Ablenkung der beiden Endabschnitte 40 und 41 derart, daß der eine der beiden Endabschnitte in Richtung auf die Reifenaußenseite hin seitlich ausgelenkt wird, während der andere Endabschnitt im wesentlichen seine Schließbahn fortsetzt.

Sobald der (in Richtung auf die Seitenflanke des Reifens gesehen :) innen liegende Endabschnitt bei der weiter erfolgenden Schließbewegung die Öffnung 44 bzw. 45 im anderen Endabschnitt erreicht hat, schnappt die hakenförmige Umbiegung des innenliegenden Endabschnitts in diese Öffnung 44 bzw. 45 ein, wobei dann die Schließstellung erreicht ist. Durch den Permanentmagneten des Endabschnitts, dessen hakenförmige Umbiegung in die Öffnung des anderen Endabschnitts einhakt, wird auch eine ausreichend gute seitliche Anlage der beiden Endabschnitte 40 und 41 aneinander gewährleistet, so daß ein unerwünschtes Herausrutschen des eingerasteten Hakens aus der Öffnung sicher verhindert wird. Falls nun bei einer Drehung des Fahrzeugreifens Kräfte auftreten, welche die Halterung in Öffnungsrichtung auseinanderbewegen könnten, wird durch den eingerasteten Haken, der in Öffnungsrichtung der Halterung sperrt (Rastkante 4 bzw. 5 der betreffenden Öffnung 44 bzw. 45), mit Sicherheit ein unerwünschtes Aufgehen der Halterung vermieden.

Durch die Ausgestaltung der beiden Endabschnitte 40 und 41 derart, daß sie etwa spiegelbildlich zueinander geformt und angeordnet sind, wird sicher gewährleistet, daß — unabhängig davon, welcher Abschnitt beim Schließen seitlich abgelenkt wird — stets ein sicheres Erreichen der Verschlußstellung (Montage-Endstellung) erzielt wird. Die Stärke der verwendeten Permanentmagneten kann so gewählt werden, daß ein sicheres seitliches Anliegen der beiden flachen Endabschnitte 40 und 41 in Schließstellung stets gewährleistet ist, daß jedoch beim Abnehmen der entsprechenden Halterung durch die Bedienungsperson keine zu großen, störenden Trennkräfte eingesetzt werden müssen.

Durch die bereits geschilderte Abnahme der Breite des jeweiligen Endabschnitts 40 bzw. 41 im Bereich der hakenförmigen Umbiegungen 42 und 43 wird das Einrasten des jeweiligen Hakens in die Öffnung 44 bzw. 45 im anderen Endabschnitt auch erleichtert.

In Fig. 3 ist die Schließstellung einer solchen Halterung gezeigt. Es bestünde natürlich auch die Möglichkeit, die hakenförmigen Umbiegungen 42 und 43 nicht rundhakenförmig (wie in Fig. 2 oder 3 gezeigt) auszubilden, sondern einen solchen Biegeverlauf vorzusehen, daß die beim Schließen der Halterung gegeneinander anlaufenden Außenflächen der beiden hakenförmigen Umbiegungen die seitliche Auslenkung nach außen für einen bestimmten der beiden Endabschnitte 40 bzw. 41 erzwingen. Die in den Figuren gezeigte Ausführungsform hat jedoch den großen Vorteil, daß hier offen bleibt, welcher der beiden Endhaken beim Schließen des Seitenbügels seitlich nach außen abgelenkt wird, daß somit jeder der beiden Endabschnitte in der Lage ist, die Einhakfunktion zu übernehmen, unabhängig davon, welcher Endabschnitt auch immer auf die Außenseite hin beim Verschließen abgelenkt werden sollte.

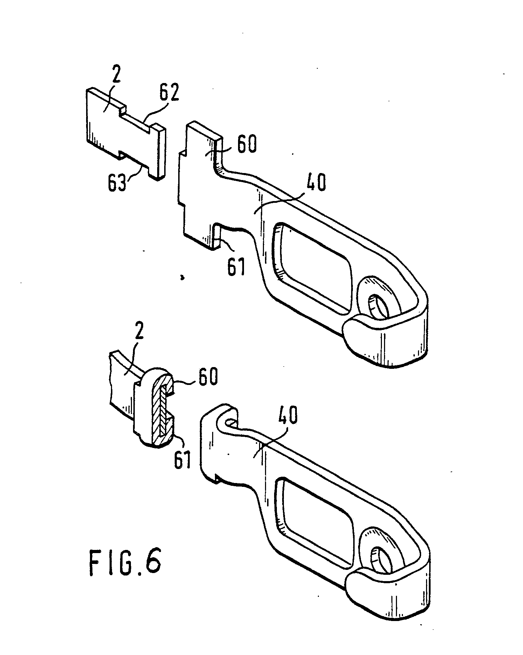

In den Fig. 4 und 5 ist eine andere Ausführungsform für die Endabschnitte gezeigt, wobei die Darstellung der Fig. 4 wiederum die geschlossene Endstellung und die Darstellung der Fig. 5 (entsprechend der Darstellung nach Fig. 2) eine Zwischenstellung dieser Endabschnitte kurz vor Erreichen der Endstellung zeigt.

Bei den Darstellungen nach den Fig. 4 und 5 werden flache Endabschnitte 50, 51 eingesetzt, die wiederum über Nieten 48 an ihrem einen Ende jeweils am Endabschnitt des zugehörigen Seitenteiles 2 bzw. 3 befestigt sind. Auch hier wird, wie etwa aus Fig. 5 gut ersichtlich, der Endabschnitt des betreffenden flachen Abschnitts 50 bzw. 51, der am betreffenden Seitenteil 2 bzw. 3 befestigt werden soll, mit einer kleinen seitlichen Auslenkung derart versehen, daß der Hauptteil des betreffenden flachen Endabschnitts 50 bzw. 51 etwa in der Verlängerung der Längsachse des betreffenden Seitenteiles 2 bzw. 3 liegt.

Der flache Endabschnitt 50 bzw. 51 weist in seinem mittleren Bereich eine Verbreiterung auf, innerhalb deren Fläche (wiederum auf der der entsprechenden Reifen-Seitenflanke abgewandten Seite) ein großer Permanentmagnet 58 bzw. 59 eingelassen ist. An dem jeweils (in Längsrichtung der entsprechenden Seitenteile 2 bzw. 3 gesehen) freien Ende des flachen Endabschnitts 50 bzw. 51 ist jeweils wiederum eine hakenförmige, von der Reifen-Seitenflanke abgerichtete Umbiegung 52 bzw. 53 vorgesehen, wobei jedoch diese Umbiegung jeweils nicht über die ganze Breite des entsprechenden flachen Endabschnitts 50 bzw. 51 erfolgt, sondern vielmehr um eine Länge Y seitlich zur Längsmittelachse der Halterung versetzt ist (vgl. Fig. 5 : die Längsmittelachse ist dort strichpunktiert eingezeichnet und der seitliche Versatz Y ist, vom Drehmittelpunkt M der gesamten Halterung — vgl. Fig. 1 — aus gesehen, radial von der strichpunktierten Mittellinie aus nach außen versetzt). Ausgehend von derselben Längsmittellinie ist (in etwa gleicher seitlicher Lage zu dieser wie die entsprechende hakenförmige Umbiegung 52 bzw. 53) auch eine Rastkante 54 bzw. 55 vorgesehen, die senkrecht zu besagter Längsmittellinie verläuft und in einem Abstand X von der Vorderkante des flachen Abschnitts 50 bzw. 51, von der aus die hakenförmige Umbiegung 52 bzw. 53 erfolgt, entgegen der Schließrichtung der Halterung versetzt angeordnet ist, wie dies aus Fig. 5 entnommen werden kann, wobei auf die spezielle Darstellung der Fig. 5 insoweit ausdrücklich verwiesen wird. Diese Rastkante 54 bzw. 55 ist, was ihre Länge betrifft, bei der Figurendarstellung nach Fig. 5 oben, d. h. in Richtung auf den Drehmittelpunkt M des gesamten Seitenbügels hin, von dem vorspringenden Endteil, der zur Befestigung des flachen Endabschnitts 50 bzw. 51 am zugehörigen Seitenteil 2 bzw. 3 vorgesehen ist, begrenzt, während an ihrem anderen Ende eine rückwärts (d. h. entgegen der Schließrichtung) vorspringende Nase 56 bzw. 57 vorgesehen ist.

Wie in Fig. 5 durch Pfeildarstellungen gezeigt, bewegen sich bei einer Verschlußbewegung die beiden flachen Endabschnitte 50 und 51 gegeneinander zu, wobei auch hier wiederum etwa spiegelbildliche Ausgestaltungen der beiden Endabschnitte 50 und 51 zueinander gewählt sind, wie dies aus Fig. 5 ersichtlich ist. Die beiden hakenförmigen Umbiegungen 52 und 53 laufen dabei mit ihren runden Außenflächen gegeneinander an, wobei durch diese Rundflächen wiederum einer der beiden flachen Endabschnitte 50 und 51 (von der Seitenflanke des Reifens aus gesehen :) nach außen während der fortgesetzten Verschlußbewegung abgelenkt wird, während die hakenförmige Umbiegung des anderen der beiden Endabschnitte auf der Rückseite des erstgenannten Abschnitts entlangläuft und dann, nach Erreichen der Rastkante 54 bzw. 55, sogleich gegen diese einhakt. Es ergibt sich hier eine Verschlußstellung, wie sie etwa aus Fig. 4 ersichtlich ist. Durch den Permanentmagneten im flachen Endabschnitt 50 (Fig. 4), dessen hakenförmige Umbiegung 52 eingehakt ist, wird ein sicheres Anliegen der beiden Mittelabschnitte der flachen Endabschnitte 50 und 51 aneinander gewährleistet. Der nasenförmige Vorsprung 57 gewährleistet dabei (bei der in Fig. 4 gezeigten Raststellung) eine gewisse seitliche Führung der hakenförmigen Umbiegung 52, so daß diese sicher gegen die Rastkante anlaufen und sich dort einhaken kann. Die Formgebung der nasenförmigen Abschnitte 56 und 57 ist dabei so gewählt, daß eine gezielte seitliche Führung der einhakenden Umbiegung 52 bzw. 53 in Richtung auf die Rastkante hin ohne Unstetigkeiten erfolgen kann, wie dies bei der in den Fig. 6 und 7 gezeigten Ausbildung der Rastkanten 56 bzw. 57 möglich ist, wobei auf die dort gezeigte Form ausdrücklich verwiesen sein soll. Bei der in den Fig. 6 und 7 dargestellten Form für die Endabschnitte 50 und 51 steht eine größere Fläche für die Anbringung der Magneten 58 und 59 zur Verfügung als bei den Ausgestaltungen, die in den Fig. 2 und 3 gezeigt sind, weil bei der in den Fig. 4 und 5 gezeigten Gestaltung der Endabschnitte 50 und 51 infolge der gewählten Lage der Rastkanten die Anbringung von Öffnungen innerhalb des Mittelabschnitts der flachen Endabschnitte 50 bzw. 51 nicht erforderlich ist.

In Fig. 6 ist schließlich eine andere Befestigungsmöglichkeit als Nieten für das sichere und einfache Anbringen der Endabschnitte an den betreffenden Seitenbügeln gezeigt :

Die obere Darstellung in Fig. 6 zeigt hierbei die Form des befestigungsseitigen Abschnitts eines Endabschnittes 40 und des Endes des zugehörigen Seitenteiles 2 im Befestigungsbereich, bevor die Befestigung ausgeführt wird, während in der unteren Darstellung in Fig. 6 die Lage nach Beendigung des Befestigungsvorgangs gezeigt ist (mit einer Schnittdarstellung durch den Befestigungsbereich hindurch).

Am flachen Endabschnitt 40 sind in dem dem zugehörigen Seitenteil 2 zugeordneten Endbereich zwei seitliche Laschen 60 und 61 vorgesehen, die sich, in nicht-befestigter Stellung, über die Seitenkanten des jeweiligen Endbereiches des Seitenteiles 2 hinaus erstrecken. In den Seitenkanten des Endbereiches des entsprechenden Seitenteiles 2 sind, der Breite und Lage der seitlichen Laschen 60 und 61 entsprechend, nutenförmige Vertiefungen bzw. Einschnitte 62 und 63 vorgesehen, wie dies in Fig. 6 erkennbar ist, wobei auf die zeichnerische Darstellung der Fig. 6 wiederum ausdrücklich verwiesen sein soll. Zur Befestigung wird nun der Endabschnitt 40 seitlich neben das Ende des entsprechenden Seitenteiles 2 so angelegt, daß der betreffende Endabschnitt, von der Seitenflanke des Reifens gesehen, zur Reifenaußenseite hin gewendet liegt. Sodann werden die seitlichen Laschen 60 und 61 in Ausrichtung zu den Vertiefungen 62 und 63 gebracht und durch diese hindurch auf die Rückseite des Seitenteiles 2 so umgebogen, daß sie durch die entsprechenden Vertiefungen 62 und 63 hindurchgreifen und auf der Rückseite des Seitenteiles wiederum zur Anlage an dieses kommen. In der unteren Darstellung der Fig. 6 ist diese Stellung gezeigt, wobei noch eine Schnittdarstellung durch den Befestigungsbereich zur näheren Erläuterung gezeigt ist. Auf diese Art und Weise läßt sich eine einfache und doch sichere Befestigung eines Endabschnitts am zugehörigen Seitenbügel erzielen, wobei durch den formschlüssigen Eingriff zwischen Seitenlaschen 60 und 61 einerseits und Vertiefungen 62 und 63 andererseits ein unerwünschtes Lösen des Endabschnitts 40 vom Seitenbügel 2 sicher verhindert ist. Sollte sich jedoch einmal dennoch die Notwendigkeit zum Auswechseln eines solchen Endabschnitts ergeben, dann ist bei dieser Art der Befestigung das Entfernen des Endabschnittes und das Neuanbringen eines anderen ohne größere Schwierigkeiten möglich, weil ein Aufbiegen der Laschen 60 und 61 auch im befestigten Zustand zum Auswechseln des betreffenden Endabschnitts 40 jederzeit ausgeführt werden kann.

**Patentansprüche**

1. Verschluß für in eine geschlossene Kreisform federnd vorgespannte, zur Montage aufspreizbare Seitenbügel von Gleitschutzketten für Fahrzeugreifen, bestehend aus zwei jeweils an einem Ende eines Seitenbügels (1, 2, 3) befestigten Endstücken (40, 41 ; 50, 51), die sich in Verschlußstellung formschlüssig aneinander verhakend ausgebildet sind, wobei eine an einem Endstück vorgesehene Rastkante (4, 5 ; 54, 55) als Anschlag für eine am anderen Endstück angebrachte hakenförmige Umbiegung (42, 43 ; 52, 53) dient, dadurch gekennzeichnet, daß beide Endstücke (40, 41 ; 50, 51) sowohl mit einer Rastkante (4, 5 ; 54, 55) wie auch mit einer hakenförmigen Umbiegung (42, 43 ; 52, 53) versehen sind, wobei jeweils die Rastkanten (4, 5 ; 52, 53) und die hakenförmigen Umbiegungen (42, 43 ; 52, 53) auf beiden Endstücken (40, 41 ; 50, 51) zueinander spiegelsymmetrisch angeordnet sind, die hakenförmigen Umbiegungen an den einander zugewandten Enden der Endstücke (40, 41 ; 50, 51) vorgesehen und auf deren der Reifenseitenfläche abgewandten Seite als entgegen der Verschließrichtung umgebogene Haken (42, 43 ; 52, 53) ausgebildet sind, und daß sich in Verschlußstellung die einander zugewandten Endbereiche beider Endstücke (40, 41 ; 50, 51) seitlich nebeneinanderliegend überdecken.

2. Verschluß nach Anspruch 1, dadurch gekennzeichnet, daß beide Endstücke (40, 41 ; 50, 51) zueinander im wesentlichen spiegelsymmetrisch ausgebildet sind.

3. Verschluß nach Anspruch 1 oder 2, dadurch gekennzeichnet, daß jedes Endstück jeweils einen flachen Abschnitt (40, 41) aufweist, der an seinem dem anderen Endstück zugewandten Ende hakenförmig umgebogen und in seinem Bereich außerhalb der hakenförmigen Umbiegung (42 ; 43) mit einer Öffnung (44, 45) versehen ist, durch die in Verschlußstellung die hakenförmige Umbiegung (42 ; 43) des anderen Endstücks hindurchgreift.

4. Verschluß nach Anspruch 3, dadurch gekennzeichnet, daß im Bereich zwischen der hakenförmigen Umbiegung (42 ; 43) und der Öffnung (44 ; 45) ein Permanentmagnet (46 ; 47) im jeweils flachen Abschnitt (40 ; 41) jedes Endstückes (40, 41 ; 50, 51) angebracht ist.

5. Verschluß nach Anspruch 4, dadurch gekennzeichnet, daß der flache Abschnitt (40 ; 41) im Bereich seiner hakenförmigen Umbiegung (42 ; 43) eine sich zum Biegungsende hin laufend verringernde Breite (B) aufweist.

6. Verschluß nach Anspruch 1 oder 2, dadurch gekennzeichnet, daß jedes Endstück jeweils einen flachen Endabschnitt (50 ; 51) aufweist, der — in Längsrichtung des Endstücks (40, 41 ; 50, 51) gesehen — an seinem freien Ende mit einer seitlich versetzten, hakenförmigen, von der Reifenflanke weggerichteten Umbiegung (52 ; 53) versehen ist, wobei an dem flachen Endabschnitt (50 ; 51) in einem Abstand (X) von der hakenförmigen Umbiegung (52 ; 53) und in gleicher seitlicher Lage wie diese die Rastkante (54 ; 55) derart vorgesehen ist, daß beim Schließen des Verschlusses die hakenförmige Umbiegung (53 ; 52) des Endbereiches des jeweils anderen Endstückes an dieser Rastkante (54 ; 55) einhakbar ist.

7. Verschluß nach Anspruch 6, dadurch gekennzeichnet, daß jeder Endbereich an seinem flachen Endabschnitt (50 ; 51) im Bereich zwischen der hakenförmigen Umbiegung (52 ; 53) und der Rastkante (54 ; 55) mit einem Permanentmagnet (58 ; 59) versehen ist.

8. Verschluß nach Anspruch 6 oder 7, dadurch gekennzeichnet, daß die Rastkante (54 ; 55) an ihrem einen Ende durch den flachen Endabschnitt (50 ; 51) und an ihrem anderen Ende durch eine Führungsnase (56 ; 57) begrenzt ist, wobei eine seitliche Führung der hakenförmigen Umbiegung (53 ; 52) des anderen Endstückes beim Einhaken derselben ausgebildet wird.

9. Verschluß nach einem der Ansprüche 1 bis 8, dadurch gekennzeichnet, daß die hakenförmigen Umbiegungen (42, 43 ; 52, 53) an beiden Endstücken (40, 41 ; 50, 51) so angeordnet sind, daß sie bei einer Verschluß-Schließbewegung mit ihren einander zugewendeten Biegerundungen gegeneinander anlaufen.

10. Verschluß nach einem der Ansprüche 3 bis 9, dadurch gekennzeichnet, daß der flache Abschnitt (40, 41 ; 50, 51) am Seitenteil (2, 3) durch Nieten (48) befestigt ist.

11. Verschluß nach einem der Ansprüche 3 bis 9, dadurch gekennzeichnet, daß der flache Abschnitt (40, 41 ; 50, 51) mittels zweier seitlicher Befestigungslaschen (60, 61) am Seitenbügel (2 ; 3) befestigt ist, indem jede seitliche Befestigungslasche (60, 61) durch eine am Ende des Seitenbügels (2, 3) entsprechend in dessen jeweiliger Seitenkante angebrachte Vertiefung (62, 63) hindurchgreift und auf der der Seitenflanke des Reifens zugewandten Rückseite des Seitenbügels (2, 3) anliegend umgebogen ist.

**Claims**

1. A clasp for side braces of anti-skid chains used on vehicle tyres, which are spring biased into a closed circular shape and may be opened out for mounting, the clasp consisting of two end pieces (40, 41 ; 50, 51), each of which is fastened to one end of a side brace (1, 2, 3), and which are shaped so as to be hooked positively one into the other in their closed position, an abutment edge (4, 5 ; 54, 55) on one of the end pieces acting as a stop for a hook-shaped bend (42, 43 ; 52, 53) on the other end piece, characterized in that both end pieces (40, 41 ; 50, 51) have an abutment edge (4, 5 ; 54, 55) as well as a hook-shaped bend (42, 43 ; 52, 53), the respective abutment edges (4, 5 ; 54, 55) and the hook-shaped bends (42, 43 ; 52, 53) on both end pieces (40, 41 ; 50, 51) being symmetrically disposed relative to each other, and also in that the hook-shaped bends are provided on those ends of the end pieces (40, 41 ; 50, 51) that oppose each other and are shaped as hooks (42, 43 ; 52, 53) bent over in the direction opposite to that of the closing direction on the side of the end pieces which is facing away from the side wall of the tyre, and in that the end regions of both end pieces (40, 41 ; 50, 51) facing towards each other overlap, lying side by side, in the closed position.

2. A clasp according to claim 1, characterized in that both end pieces (40, 41 ; 50, 51) are substantially symmetrical in shape relative to each other.

3. A clasp according to either claim 1 or 2 characterized in that each end piece has a flat section (40, 41), which is bent in the shape of a hook on its end opposing the other end piece and is provided with an opening (44, 45) in the area beyond the hook-shaped bend (42 ; 43), through which the hook-shaped bend (42 ; 43) of the other end piece passes in the closed position.

4. A clasp according to claim 3, characterized in that in the area between the hook-shaped bend (42 ; 43) and the opening (44 ; 45) a permanent magnet (46 ; 47) is fitted to the respective flat section (40 ; 41) of each end piece (40, 41 ; 50, 51).

5. A clasp according to claim 4, characterized in that the width (B) of the flat section (40 ; 41) in the area of its hook-shaped bend (42 ; 43) decreases towards the end of the bend.

6. A clasp according to either claim 1 or 2, characterized in that each end piece has a flat end section (50 ; 51), which on its free end — as viewed in the longitudinal direction of the end piece (40, 41 ; 50, 51) is provided with a laterally off-set hook-shaped bend (52 ; 53) facing away from the side wall of the tyre, an abutment edge (54 ; 55) being arranged on the flat end piece (50 ; 51) at a distance (X) from the hook-shaped bend (52 ; 53) and in the same lateral position as the latter in such a way, that on closing the clasp the hook-shaped bend (52 ; 53) in the end region of the other end piece can be hooked onto this abutment edge.

7. A clasp according to claim 6, characterized in that each end region is provided with a permanent magnet (58 ; 59) on its flat end section (50 ; 51) in the area between the hook-shaped bend (52 ; 53) and the abutment edge (54 ; 55).

8. A clasp according to either claim 6 or 7, characterized in that the abutment edge (54 ; 55) is bounded by the flat end section (50 ; 51) on one end and by a locating nose (56 ; 57) on the other end, whereby a lateral guidance for the hook-shaped bend (53 ; 52) of the other end piece is formed when hooking in same.

9. A clasp according to any one of the claims 1 to 8, characterized in that the hook-shaped bends (42, 43 ; 52, 53) are disposed in such a way on both end pieces (40, 41 ; 50, 51) that they abut against each other with their rounded bends.

10. A clasp according to any one of the claims 3 to 9, characterized in that the flat section (40, 41 ; 50, 51) is fastened to the side part (2, 3) by means of rivets (48).

11. A clasp according to any one of the claims 3 to 9, characterized in that the flat section (40, 41 ; 50, 51) is fastened to the side brace (2 ; 3) by means of two lateral lugs (60, 61), so that each lateral lug (60, 61) passes through a corresponding recess (62, 63) arranged in the lateral edge on the end of the side brace (2, 3) and is bent over and lying against the back of the side brace (2, 3) which is facing towards the side wall of the tyre.

## Revendications

1. Fermeture pour une bride latérale de chaînes antidérapantes pour pneumatiques de véhicules, précontrainte élastiquement sous forme circulaire fermée et pouvant être déployée pour le montage, constituée de deux pièces terminales (40, 41 ; 50, 51) fixées chacune à une extrémité d'une bride latérale (1, 2, 3) qui sont conformées pour s'accrocher l'une à l'autre avec concordance de forme en position de fermeture, un bord d'accrochage (4, 5 ; 54, 55) prévu sur une pièce terminale servant de butée pour une partie recourbée (42, 43 ; 52, 53) en forme de crochet disposée sur l'autre pièce terminale, caractérisée par le fait que les deux pièces terminales (40, 41 ; 50, 51) sont pourvues aussi bien d'un bord d'accrochage (4, 5 ; 54, 55) que d'une partie recourbée en forme de crochet (42, 43 ; 52, 53) les bords d'accrochage (4, 5 ; 52, 53) et les parties recourbées en forme de crochet (42, 43 ; 52, 53) étant disposés symétriquement entre-eux sur chacune des pièces terminales (40, 41 ; 50, 51), les parties recourbées en forme de crochet sont prévues sur les extrémités des pièces terminales (40, 41 ; 50, 51) tournées l'une vers l'autre et sont tournées sur leur face opposée au flanc latéral du pneumatique comme des crochets (42, 43 ; 52, 53) repliés dans le sens opposé au sens de fermeture, et en ce que, en position de fermeture les zones d'extrémités tournées l'une vers l'autre des deux pièces terminales (40, 41 ; 50, 51) se recouvrent en étant disposées côte à côte latéralement.

2. Fermeture selon la revendication 1 caractérisée par le fait que lés deux pièces terminales (40, 41, 50, 51) sont conformées de façon essentiellement symétrique l'une par rapport à l'autre,

3. Fermeture selon la revendication 1 ou 2 caractérisée par le fait que chaque pièce terminale présente une région plate (40, 41) qui est recourbée en forme de crochet à son extrémité tournée vers l'autre pièce terminale et est pourvue, dans sa zone extérieure à la partie recourbée en forme de crochet (42 ; 43), d'une ouverture (44, 45) à travers laquelle s'accroche la partie recourbée en forme de crochet (42 ; 43) de l'autre pièce terminale, en position de fermeture.

4. Fermeture selon la revendication 3 caractérisée par le fait qu'un aimant permanent (46, 47) est disposé dans la zone située entre la partie recourbée en forme de crochet (42 ; 43) et l'ouverture (44 ; 45) de la région plate (40 ; 41) de chaque pièce terminale (40, 41 ; 50, 51).

5. Fermeture selon la revendication 4 caractérisée par le fait que la région plate (40 ; 41) présente, dans la zone de sa partie recourbée en forme de crochet (42 ; 43), une largeur (B) allant se rétrécissant progressivement vers l'extrémité de la partie recourbée.

6. Fermeture selon la revendication 1 ou 2 caractérisée par le fait que chaque pièce terminale présente une région d'extrémité plate (50 ; 51) qui (vue dans le sens longitudinal de la pièce terminale (40, 41 ; 50, 51)) est pourvue à son extrémité libre d'une partie recourbée (52 ; 53) en forme de crochet, décalée latéralement, et tournée à l'opposé du flanc du pneumatique, le bord d'accrochage (54 ; 55) est disposé sur la région d'extrémité plate (50, 51) à une distance (X) de la partie recourbée en forme de crochet (52 ; 53) et dans la même position latérale que celle-ci de sorte que lors de la fermeture, la partie recourbée en forme de crochet (53 ; 52) de la zone d'extrémité de l'autre pièce terminale puisse être accrochée à ce bord (54 ; 55).

7. Fermeture selon la revendication 6 caractérisée par le fait que chaque zone d'extrémité est pourvue d'un aimant permanent (58 ; 59) sur sa région d'extrémité plate (50 ; 51) dans la zone entre la partie recourbée en forme de crochet (52 ; 53) et le bord d'accrochage (54 ; 55).

8. Fermeture selon la revendication 6 ou 7 caractérisée par le fait que le bord d'accrochage (54 ; 55) est limité à l'une de ses extrémités par la région terminale plate (50 ; 51) et à son autre extrémité par un bec de guidage (56, 57) pour former un guidage latéral de la partie en forme de crochet (53 ; 52) de l'autre pièce terminale lorsque l'on accroche celle-ci.

9. Fermeture selon l'une des revendications 1 à 8 caractérisée par le fait que les parties recourbées en forme de crochet (42, 43 ; 52, 53) sont disposées sur les deux pièces d'extrémité (40, 41 ; 50, 51) de telle façon que lors du mouvement de fermeture elles se rapprochent avec leurs parties arrondies tournées l'une vers l'autre.

10. Fermeture selon l'une des revendications 3 à 9 caractérisée par le fait que la région plate (40, 41 ; 50, 51) est fixée à la partie latérale (2, 3) par des rivets (48).

11. Fermeture selon l'une des revendications 3 à 9 caractérisée par le fait que la région plate (40, 41 ; 50, 51) est fixée à la bride latérale (2 ; 3) au moyen de deux pattes de fixation (60 ; 61) latérales, que le fait que chaque patte de fixation latérale (60, 61) pénètre dans un évidement (62 ; 63) pratiqué dans le bord latéral correspondant et sur lequel est replié sur la face dorsale de la bride latérale (2 ; 3) tournée vers le flanc du pneumatique jusqu'à reposer sur celle-ci.

FIG.1

FIG.2

FIG.3

FIG.4

FIG.5

FIG.6